# EUROPEAN PATENT SPECIFICATION

(11) **EP 4 358 071 B1**
(45) Date of publication and mention of the grant of the patent: **03.12.2025**
(21) Application number: 21945453.5
(22) Date of filing: 16.06.2021
(51) Int. Cl.: G09F 3/02, G06K 19/06

(54) **COMPOSITE MESSAGE LABEL AND PRINTING METHOD THEREFOR**
ZUSAMMENGESETZTES NACHRICHTENETIKETT UND DRUCKVERFAHREN DAFÜR
ÉTIQUETTE DE MESSAGE COMPOSITE ET PROCÉDÉ D'IMPRESSION DE CELLE-CI

(43) Date of publication of application: 24.04.2024
(73) Proprietor: Dongguan Yuemei Label and Printing Co., Ltd., Dongguan, Guangdong 523000 (CN); HP Silicone Label Ltd., New Taipei City, Taiwan 244015 (TW)
(72) Inventor: TSAI, Kuolih, Dongguan, Guangdong 523560 (CN)
(74) Representative: Schwerbrock, Florian
(86) International application number: PCT/CN2021/100411
(87) International publication number: WO 2022/261866

(56) References cited:
- WO-A1-2018/175281
- WO-A1-2021/021938
- CN-A- 103 794 132
- CN-A- 107 423 796
- CN-A- 109 376 833
- GB-A- 2 548 896
- GB-A- 2 548 897
- US-A1- 2008 259 400

## Description

### FIELD OF THE INVENTION

The present invention relates to a composite information label, particularly relates to composite information label and the printing method thereof.

### BACKGROUND OF THE INVENTION

Traditional labels allow consumers to identify relevant information about the product, such as manufacturer, seller or the product information.

Since the traditional label only provide limited information in a limited area, the use of quick response code (QR codes) has been extended to store more information, in which the aforementioned information is converted through encoding to meet the reading format of quick response code. If the user wants to interpret the encoded information, it needs to be decoded by a reader, the quick response code does solve some of the problems. However, in order to add anti-counterfeiting and traceability functions to the quick response code, such as a URL is added to the quick response conde to trace the authenticity of the product or an additional laser anti-counterfeiting label is added to the quick response code, the former URL does not allow consumers to scan and verify the label immediately, while latter virtually incurs additional cost for manufactures.

UK patent applications GB 2548 897A and GB 2548 896A concern QR codes indicating an environmental exposure.

International patent applications WO2018175281A1 and WO2021021938A1 concern two-dimensional barcodes with dynamic environmental data.

Therefore, the present invention presents a composite information label and its printing method to solve the traditional problem.

### SUMMARY OF THE INVENTION

It is a first object of the present invention is to provide a composite information label that can provide a single or composite information under different environment conditions.

It is a second object of the present invention is that the aforementioned composite information label can be applied to different carriers to indicate the manufacturers, suppliers, vendors, product information, sponsors, trademarks, text and other source of the carrier.

It is a third object of the present invention is to use silicon ink according to the aforementioned composite information label to solve the problem of rendering of water-based ink on the carrier, so that the composite information label has the characteristic of friction resistance, miniaturization, high resolution, and water resistance, sexual.

It is a fourth object of the present invention is to provide a composite information label that is attached to a release layer (or release film) and adhered to a carrier for long time through thermal transfer technology.

It is a fifth object of the present invention is to provide a composite information label which combine thermochromic ink, ultraviolet fluorescent ink and a visible ink in the same carrier to provide a variety of changes and be applicable to different application fields.

It is a sixth object of the present invention is to show different operating parameters through the information (such as text, pattern, symbols) provided by at least three inks according to the aforementioned composite information label.

It is a seventh object of the present invention is to provide fluorescent inks for increasing the number of information according to aforementioned composite information label.

It is an eighth object of the present invention is that the aforementioned composite information label is applied to a label such as quick response code (or QR code) type.

It is a ninth object of the present invention is to provide a composite information label printing method to realize the aforementioned composite information label.

In order to achieve the above objects and other objects, the present invention provides a composite information label according to claim 1.

In order to achieve above objects and other objects, the present invention provides a composite information label printing method according to claim 18.

To compare with traditional labels, the composite information label and its printing method provided by the present invention having the following features:
(i) mini label code: the quick response code is taken as an example, the composite information label and its printing method provided by the present invention is designed as a square pattern with a minimum size of 5 millimeters (mm)* 5mm, which can be used in application fields such as tracing origin, manufacturer, sponsor, seller, and brand, anti-counterfeiting and product promotion. To compare with the traditional minimum size of the traditional label that can only be designed at a minimum square pattern of 20mm*20mm, the present invention has a field that can provide miniaturization obviously. The present invention uses silicon ink which can print on the carrier without rendering and blooming, and can provide high-resolution data, wear resistance, cleaning resistance and other advantages.
(ii) composite information: the multiple information is created through ink combinations with different characteristics (such as configuration, stacking), which can show single or composite information under different environment condition (such as temperature, spectrum, frequency spectrum). To compare with the traditional inks that can only show a single information, and the present invention can be applied to different application fields.
(iii) reduce process steps: the quick response code is taken as an example, the present invention provides a process contrary to the traditional quick response code process, that is, the quiet zone is printed with black ink and the quick response code with white ink is printed on the black ink to form a quick response code with white characters on a black background. In addition to being readable, the aforementioned quick response code can also reduce the number of layers of quick response code printed with traditional black ink.

The specific technology used in the present invention will be further explained through the following examples and attached drawings.

### BRIEF DESCRIPTION OF THE DRAWINGS

Fig. 1 is an exploded schematic diagram of a composite information label according to the first embodiment of the present invention.
Fig. 2 is an exploded schematic diagram of a composite information label according to the first embodiment of the present invention.
Fig. 3 is a schematic diagram illustrating the application of the composite information label of Fig. 2 disposed on a carrier according to the present invention.
Fig. 4a is a schematic diagram illustrating the first state of the composite information label of Fig. 2 according to the present invention.
Fig 4b is a schematic diagram illustrating the second state of the composite information label of Fig. 2 according to the present invention.
Fig. 4c is a schematic diagram illustrating the third state of the composite information label of Fig. 2 according to the present invention.
Fig. 4d is a schematic diagram illustrating the fourth state of the composite information label of Fig. 2 according to the present invention.
Fig. 5a is a schematic diagram of the first state of the composite information label according to the third embodiment of the present invention.
Fig. 5b is a schematic diagram of the second state of the composite information label according to the third embodiment of the present invention.
Fig. 5c is a schematic diagram of the third state of the composite information label according to the third embodiment of the present invention.
Fig. 6 is an exploded schematic diagram of a composite information label according to the fourth embodiment of the present invention.

### DETAILED DESCRIPTION OF THE PREFERRED EMBODIMENT

In order to fully understand the purpose, characteristics and effects of the present invention, the present invention is described in detail through the following specific embodiments in conjunction with the attached drawings, as follows.

In the present invention, "a" or "an" is used to describe the units, elements and components described herein. This is done only for convenience of explanation and to provide a general sense of the scope of the invention. Therefore, unless it is obvious otherwise, such description should be understood to include one, at least one, and the singular also includes the plural.

In this present invention, the terms "include", "includes", "has", "contains", or any other similar terms are intended to cover a non-exclusive inclusion. For example, an element, structure, article, or device that contains multiple elements is not limited to those listed herein but may include elements that are not expressly listed but are generally inherent to the element, structure, article, or device. Other requirements. Otherwise, unless expressly stated to the contrary, the term "or" means an inclusive "or" and not an exclusive "or".

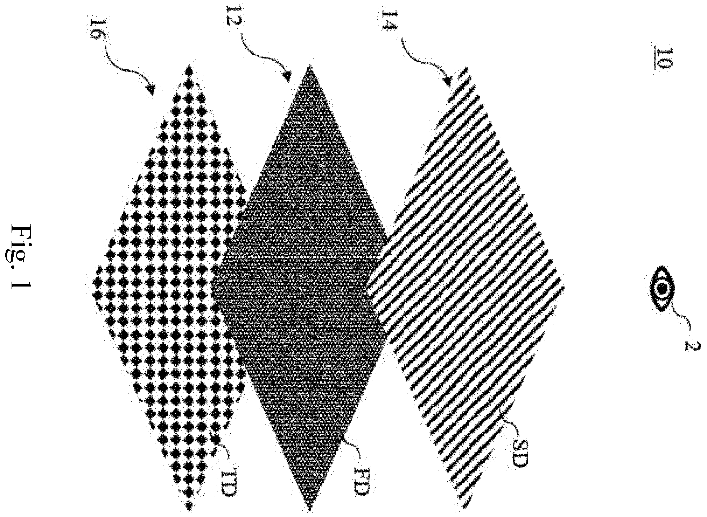

Referring to Fig. 1, which is an exploded schematic diagram of a composite information label according to the first embodiment of the present invention. In Fig. 1, the composite information label 10 includes a basic information module 12, a first variation information module 14 and a second variation information module 16. The sequence of the basic information module 12, the first variation information module 14 and the second variation information module 16 can be set arbitrarily. In this embodiment, from top to bottom, the composite information label 10 is the first variation information module 14, the basic information module 12 and the second variation information module 16. Herein, three layers (or multi-layers are used as an example. In other embodiments, it can be a single layer. In addition, the arrangement in this embodiment is the sequence of the basic information module 12, the first variation information module 14, and the second variation information module 16. In other embodiments, the sequence can be adjusted arbitrarily according to the situation. Furthermore, this embodiment takes the basic information module 12, the first variation information module 14 and the second variation information module 16 as an example. In other embodiments, there may also be two elements of the basic information module 12 and the first variation information module 14, or two elements of the basic information module 12 and the second variation information module 16. In addition, the first variation information module 14 and the second variation information module 16 are collectively referred to as variation information module, which are composed of parametric variation ink. The parametric variation ink can be, for example, thermochromic ink, and ultraviolet fluorescent ink.

First, the basic information module 12 is made of a visible ink, and the basic information module 12 can optionally forms a first information FD of text or pattern. Herein, the first information FD is a pattern that fills up the basic information module 12 as an example, in which the basic information module 12 uses visible ink, so under the visible light spectrum, the first information FD formed by the visible ink can be directly seen with the naked eye. In this embodiment, the visible ink is silicon ink.

Next, the first variation information module 14 is formed above the basic information module 12 using thermochromic ink, and the first variation information module 14 can also optionally form the second information SD of text or pattern. Herein, the second information SD is a pattern that fills up the first variation information module 14 as an example, in which, the first variation information module 14 uses thermochromic ink, so under different temperatures, the thermochromic ink will produce color changes. In other words, the second information SD can exhibit the first color at normal temperature and exhibit the second color at thermotropic temperature. For example, when the thermochromic ink is at normal temperature (or low temperature), the thermochromic ink appears black. When the temperature is higher than normal temperature (or low temperature), the thermochromic ink appears transparent. In this embodiment, the first variation information module 14 is silicon ink.

In addition, ultraviolet fluorescent ink is used to form a second variation information module 16 below the basic information module 12, and the second variation information module 16 can also optionally form a third information TD of text or pattern. Herein, the third information TD is a pattern that fills up the second variation information module 16 as an example, in which the second variation information module 16 uses ultraviolet fluorescent ink, so under irradiation with a spectrum of, for example, ultraviolet light, it can be observed that the second variation information module 16 generates a third information TD with fluorescence. The third information TD may exhibit single or multiple fluorescent colors in the non-visible light spectrum. In this embodiment, the second variation information module 16 is silicon ink.

After the basic information module 12, the first variation information module 14 and the second variation information module 16 are stacked, according to an operating condition of a normal temperature NT, a thermotropic temperature ANT, a visible light spectrum VS and a non-visible light spectrum NVS, the composite information label 10 can form the following types in arrangement of Fig. 1. In this embodiment, the temperature range of the normal temperature NT is between 20-28 degrees Celsius, the temperature range of the thermotropic temperature ANT is equal to or larger than 35 degrees Celsius, and the spectrum range of the non-visible light NVS is between 10 nanometers and 400 nanometers or named ultraviolet.
(a) under the condition of normal temperature NT and the visible light spectrum VS, since the basic information module 12 uses visible ink, the basic information module 12 can directly show the first information FD. In addition, the first variation information module 14 uses thermochromic ink. According to the above description of thermochromic ink, the second information SD with thermochromic ink at normal temperature NT will appear black. The black second information SD blocks the first information FD, so that the first information FD showed by the basic information module 12 under the visible light spectrum VS cannot be observed at the observation location 2; and the second variation information module 16 uses ultraviolet fluorescent ink, in which under the visible light spectrum VS, the third information TD of the second variation information module 16 cannot absorb the energy of ultraviolet light and enter an excited state, so the third information TD cannot emit fluorescence.
(b) under the condition of thermotropic temperature ANT and the visible light spectrum VS, the basic information module 12 still shows the first information FD. In addition, the first variation information module 14 has a second information SD with thermochromic ink under the thermotropic temperature ANT, the second information SD will appear colorless (or transparent) without blocking the first information FD, so that the first information FD showed by the basic information module 12 under the visible light spectrum VS can be directly observed through the second information SD at the observation location 2. Moreover, the third information TD of the second variation information module 16 still cannot emit fluorescence under the visible light spectrum VS.
(c) under the condition of normal temperature NT and non-visible light spectrum NVS, the basic information module 12 still shows the first information FD in the non-visible light spectrum NVS. In addition, the second information SD with thermochromic ink of the first variation information module 14 at normal temperature NT will appear black to block the first information FD, so that the first information SD showed by the basic information module 12 under the visible light spectrum VS cannot be observed through the second information SD at the observation location 2; and the third information TD of the second variation information module 16 is under the non-visible light spectrum NVS(especially is spectrum of the ultraviolet light). Since the third information TD with the ultraviolet fluorescent ink absorb the energy of ultraviolet light and enters the excited state, the third information TD emits fluorescence. It is worth noted that in this embodiment, the third information TD is blocked by the first information TD, but the fluorescence may still diffuse through the edge of the first information FD.
(d) under the condition of thermotropic temperature ANT and the non-visible light spectrum NVS, the basic information module 12 still shows the first information FD in the non-visible light spectrum NVS. In addition, the second information SD with thermochromic ink of the first variation information module 14 at the thermotropic temperature ANT will appear colorless (or transparent) without blocking the first information FD, so that the first information FD showed by the basic information module 12 under visible light spectrum VS can be directly observed through the second information SD at observation location 2; and the third information TD of the second variation information module 16 is under the non-visible light spectrum NVS (especially is under ultraviolet light spectrum), since the third information TD with the ultraviolet fluorescent ink absorbs the energy of the ultraviolet light and enters into an excited state, the third information TD emits fluorescence.

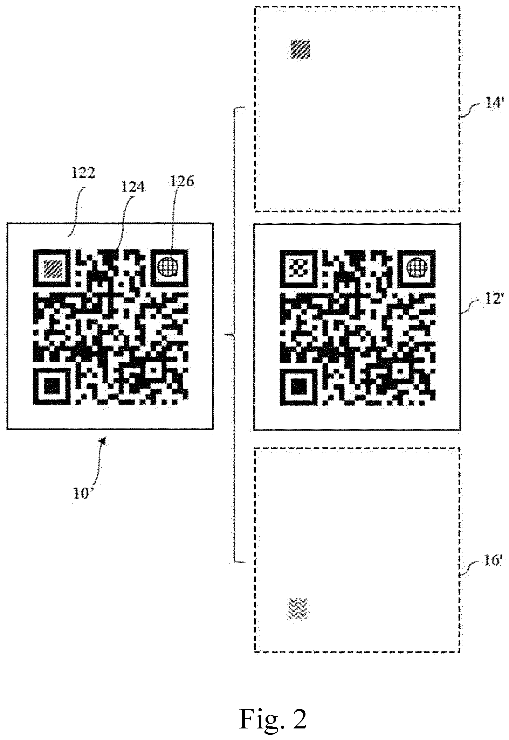

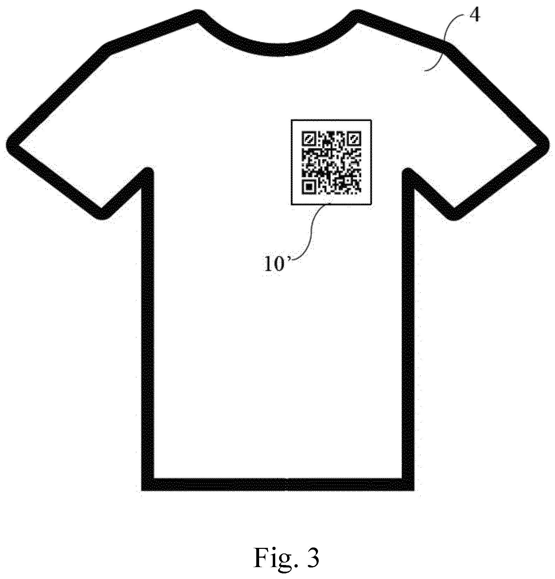

Referring also to Fig. 2, which is an exploded schematic diagram of a composite information label according to the first embodiment of the present invention. In Fig. 2, the composite information label 10' is another embodiment of the first embodiment using quick response code (QR code). The composite information label 10' operates under the conditions of normal temperature NT and non-visible light spectrum NVS as an example. The composite information label 10' can be attached to the carrier 4 by thermal transfer technology. Herein, the carrier 4 is taken as an example of clothing. Refer to Fig. 3 as well, which illustrates that the composite information label in Fig. 2 of the present invention is disposed on the carrier. The material of the carrier 4 can be at least one of cotton, linen, wool, silk, rayon, nylon, polyester, acrylic fiber, acetate fiber, triacetate fiber, elastic fiber, glass fiber, metal fiber, rubber fiber and pulp fiber. The size of the composite information label 10' is less than 20mm*20mm, especially it can be narrowed to the size of 5mm*5mm.

The composite information label 10' includes a basic information module 12', a first variation information module 14 and a second variation information module 16. From top to bottom, there are the first variation information module 14', the basic information module 12' and the second variation information 16'.

In another embodiment, the composite information label 10' further includes a release layer (not shown). The composite information label 10' can be pre-set on the release layer, and then attached to the carrier 4 the thermal transfer technology. In other words, the release layer is applied to the thermal transfer technology is applied to the basic information module 12', the first variation information module 14, and the second variation information module 16 by thermal transfer technology, so that the basic information module 12', the first variation information module 14' and the second variation information 16 is detached from the release layer and is attached to the carrier 4.

Returning to Fig. 2, the basic information module 12' can be a standard quick response code, which can be adapted to a standard reader, in which the quick response code at least includes a quiet zone 122, a finder pattern 124 and a data area 126. It is worth noted that in this embodiment, the basic information module 12' of the composite information label 10' is made of black ink, and the finder pattern 124 and the data area 126 are printed with white ink. In another embodiment, the basic information module 12' of the composite information label 10' can also be made of white ink, and the finder pattern 124 and the data area 126 are printed with black ink.

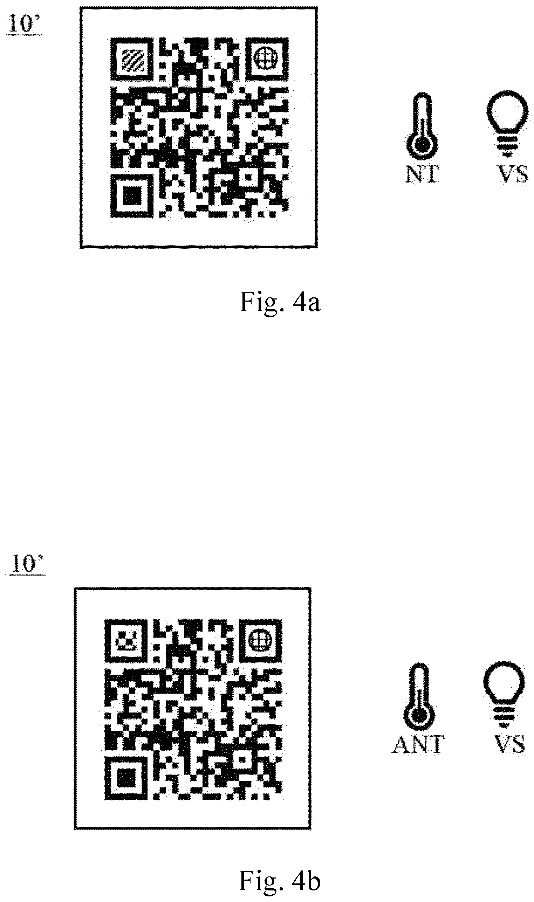

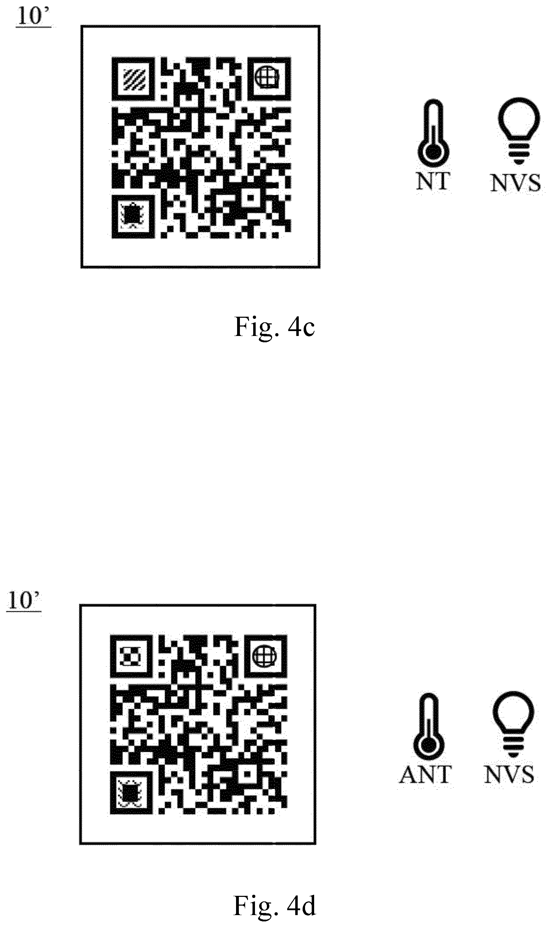

Referring to Fig. 4a to Fig. 4d together, there are schematic diagrams illustrating the operation of the composite information label of Fig. 2 under different environmental conditions of the present invention. Fig. 4a is a schematic diagram illustrating the first state of the composite information label of Fig. 2 of the present invention; Fig. 4b is a schematic diagram illustrating the second state of the composite information label of Fig. 2 of the present invention; Fig. 4c is a schematic diagram illustrating the third state of the composite information label of Fig. 2 of the present invention; and Fig. 4d is a schematic diagram illustrating the fourth state of the composite information label of Fig. 2 of the present invention.

In Fig. 4a, the operating condition of the composite information label 10' is operated under normal temperature NT and the visible light spectrum VS. In Fig. 4a, the composite information label 10' exhibits the quiet zone 122, the finder pattern 124 and the data area 126 of the first information FD of the basic information module 12', but the first information FD of the finder pattern 124 in the upper left corner is affected by the blocking of the first variation information module 14.

In Fig. 4b, the operating condition of the composite information label 10' is operated under thermotropic temperature ANT and visible light spectrum VS. In Fig. 4b, the first variation information module 14' becomes a transparent second information SD due to the thermotropic temperature ANT. Therefore, by releasing the first information FD in the quiet zone 122 of the basic information module 12' located at the finder pattern 124 in the upper left corner of Fig. 4a, so that the first information FD originally located at the finder pattern 124 in the upper left corner can be seen directly.

In Fig. 4c, the operating condition of the composite information label 10' is operated under normal temperature NT and non-visible light spectrum NVS. In Fig. 4c, the first variation information module 14' returns to the second information SD with black due to the normal temperature NT. Therefore, the quiet zone 122 of the basic information module 12 originally located at the finder pattern 124 in the upper left corner of Fig. 4b is blocked again. In addition, since the third information TD of the first variation information module 14' absorbs the energy of the ultraviolet light to generate fluorescence, the finder pattern 124 in the lower left corner in addition to appear the first information FD, the third information TD below the first information FD also emits fluorescence.

In Fig. 4d, the operating condition of the composite information label 10' is operated under thermotropic temperature ANT and non-visible light spectrum NVS. In Fig. 4d, the second information SD becomes transparent due to the thermotropic temperature ANT. Therefore, the first information FD of the quiet zone 122 of the basic information module 12 where the finder pattern 124 in the upper left corner is released again. In addition, since the third information TD of the first variation information module 14' absorbs the energy of ultraviolet light to generate fluorescence, the finder pattern 124 in the lower left corner in addition to show the first information FD, the third information TD below the first information FD also emits fluorescence.

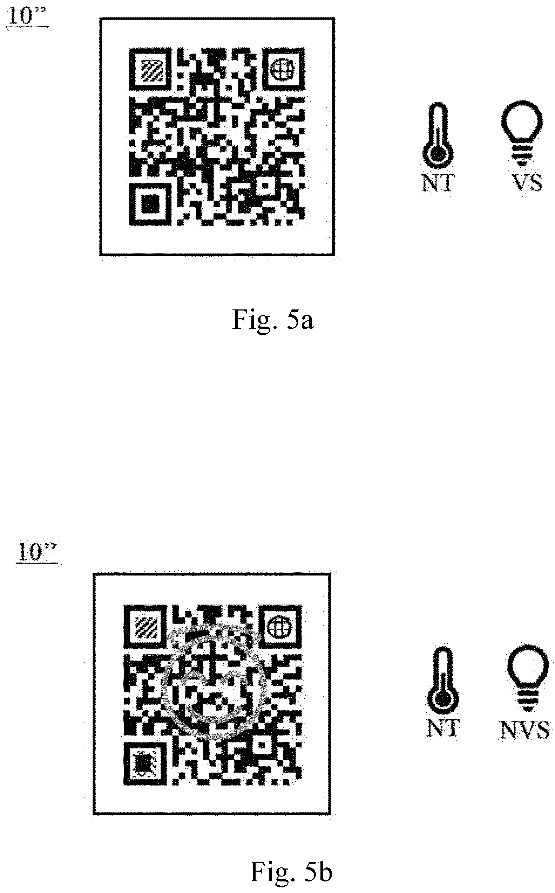

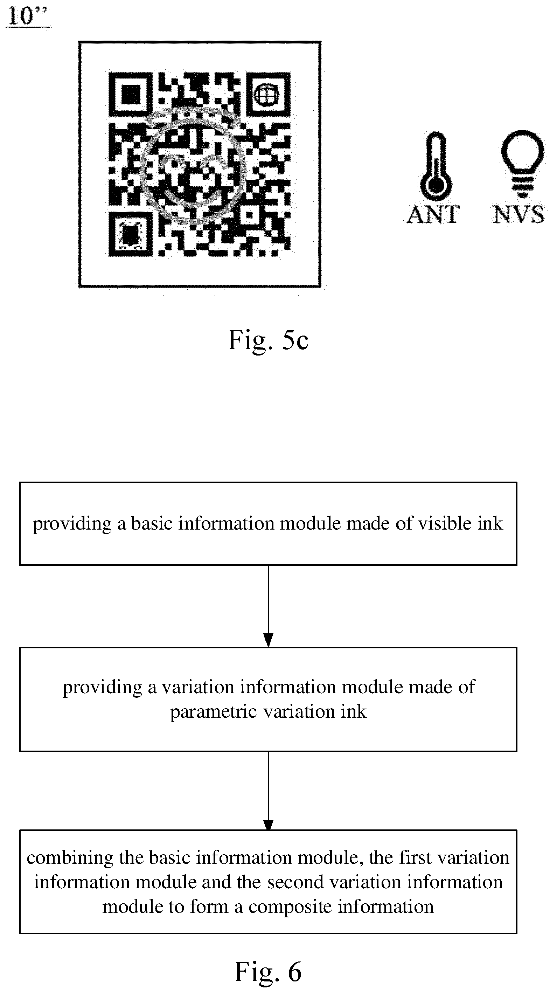

Referring to Fig. 5a to Fig. 5c together, there are schematic diagram showing the state of the composite information label under different environmental conditions according to the third embodiment of the present invention. Fig. 5a is a schematic diagram of the first state of the composite information label according to the third embodiment of the present invention; Fig. 5b is a schematic diagram of the second state of the composite information label according to the third embodiment of the present invention; and Fig. 5c is a schematic diagram of the third state of the composite information label according to the third embodiment of the present invention.

In addition to the composite information label 10" includes the basic information module 12', the first variation information module 14' and the second variation information module 16' of the second embodiment, the composite information label 10" further includes a fourth variation information module 18, which is stacked on the first variation information module 14' and is taken as an example. In other embodiment, the fourth variation information module 18 can also be stacked on others functional layer.

The descriptions of the basic information module 12', the first variation information module 14' and the second variation information module 16 are as mentioned above and will not be repeated herein.

The fourth variation information module 18 provides a fourth information FD', for example, the fourth information FD' is text or pattern. Herein, the fourth information FD' is located at the location of data area 126, and the fourth information FD' is a smiley face pattern. The fourth variation information module FD' is fluorescent ink, the absorption wavelength of the fluorescent ink can be the same as or different from the wavelength absorbed by the third layer TD. Herein, the same wavelength is used as an example, the third information TD and the fourth information FD' in Fig. 5b and Fig. 5c absorb the non-visible light. Accordingly, in addition to the third information TD emits fluorescence, the fourth information FD' also emits fluorescence.

In the abovementioned, the first information FD, the second information SD and the third information TD is solid patterns or hollow patterns.

Refer to Fig. 6, which is a flow chart of a composite information label according to the fourth embodiment of the present invention. In Fig. 6, the present invention provides a composite information label printing method, starting from step S61: providing a basic information module made of visible ink, the basic information module forms a first information, in which the visible ink is silicon ink.

Next, step S62: providing a variation information module made of parametric variation ink, in which the parametric variation ink is silicon ink. The parametric variation ink is at least one of thermochromic ink and ultraviolet fluorescent inks, the thermochromic ink forms the first variation information module of the second information, and the ultraviolet fluorescent ink forms the second variation information module of the third information.

Next, step S63: combining the basic information module, the first variation information module and the second variation information module to form a composite information, which the basic information module and the variation information module are combined into one or more layers, an operating condition based on at least one of temperature and wavelength are applied to the variation information module, so the basic information module is interacted with the variation information module, and the first information, the second information, and the third information provide at least one of the functions of showing, hiding, penetrating and blocking. For example, depending on the operating condition of temperature and wavelength, the composite information can achieve the following changes:
(a) under normal temperature and visible light spectrum, the basic information module, the first variation information module, and the second variation information module show at least one of the first information and the second information;
(b) under thermochromic temperature and visible light spectrum, the basic information module, the first variation information module and the second variation information module show the first information;
(c) under normal temperature and non-visible light spectrum, the basic information module, the first variation information module, and the second variation information module show at least one of the first information, the second information, and the third information; and
(d) under thermochromic temperature and non-visible light spectrum, the basic information module, the first variation information module, and the second variation information module show at least one of the first information and the third information.

In one embodiment, the basic information module is printed in the form of a quick response code (QR code). the quick response code contains at least a quiet zone, finder pattern, and a data area. The size of the composite information label is less than 20mm*20mm, for example, the size can be 5mm*5mm. in another embodiment, the basic information module is made of black ink, and the finder pattern and the data area are printed with white ink.

Although the embodiments of the present invention are disclosed above, they are not intended to limit the present invention. Anyone skilled in the relevant art can modify any shape, structure, and feature described in the claims of the present invention without departing from the spirit and scope of the present invention. Slight changes may be made to the method, method and quantity. Therefore, the scope of patent protection of the present invention must be determined by the scope of the claims attached to this specification.

While the invention has been described in terms of what is presently considered to be the most practical and preferred embodiments, it is to be understood that the invention needs not be limited to the disclosed embodiments. On the contrary, it is intended to cover various modifications and similar arrangements as delimited by the scope of the appended claims.

## Claims

1. A composite information label (10, 10', 10"), wherein:
a basic information module (12,12') forms a first information (FD), wherein the basic information module (12,12') is a visible ink, and the first information (FD) is at least one of text and a pattern;
the label being **characterized in that**:
a variation information module (14, 14') forms at least one of a second information (SD) and a third information (TD), wherein the variation information module (14, 14') is a parametric variation ink, and the second information (SD) and the third information (TD) are at least one of text and pattern respectively, and the parametric variation ink is at least one of a thermochromic ink and an ultraviolet fluorescent ink, the thermochromic ink forms a first variation information module (14, 14') of the second information (SD) and the ultraviolet fluorescent ink forms a second variation information module (16, 16') of the third information (TD);
wherein the basic information module (12, 12') and the variation information module (14, 14') are combined into one or more layers, an operating condition based on at least one of temperature and wavelength are applied to the variation information module, so the basic information module (12, 12') is interacted with the variation information module,
wherein the temperature includes a normal temperature (NT) and a thermochromic temperature (ANT) and the wavelength further includes a visible light spectrum (VS) and a non-visible light spectrum (NVS),
wherein the basic information module (12, 12') combined with the first variation information module (14, 14') and the second variation information module (16, 16') is at least one of (a) to (d) according to the operating condition of the normal temperature (NT), the thermochromic temperature (ANT), the visible light spectrum (VS) and the non-visible light spectrum (NVS):
(a) showing at least one of the first information (FD) and the second information (SD) under the operating conditions of the normal temperature (NT) and the visible light spectrum (VS);
(b) showing the first information (FD) under the operating condition of the thermotropic temperature (ANT) and the visible light spectrum (VS);
(c) showing at least one of the first information (FD), the second information (SD) and the third information (TD) under the operating condition of the normal temperature (NT) and the non-visible light spectrum (NVS); and
(d) showing at least one of the first information (FD) and the third information (TD) under the operating condition of the thermotropic temperature (ANT) and the non-visible light spectrum (NVS).

2. The composite information label according to claim 1, further comprising a carrier (2) to attach the basic information module (12, 12'), the first variation information module (14, 14') and the second variation information module (16, 16').

3. The composite information label (10, 10', 10") according to claim 2, wherein the material of the carrier (2) is at least one of cotton, linen, wool, silk, rayon, nylon, polyester, acrylic fiber, acetate fiber, triacetate fiber, elastic fiber, glass fiber, metal fiber, rubber fiber and pulp fiber.

4. The composite information label (10, 10', 10") according to claim 2, further comprising a release layer, and the basic information module (12, 12'), the first variation information module (14, 14'), and the second variation information module (16, 16') are arranged on the release layer.

5. The composite information label (10, 10', 10") according to claim 4, wherein a thermal transfer technology is applied to the release layer with the basic information module (12, 12'), the first variation information module (14, 14') and the second variation information module (16, 16'), so that the basic information module (12, 12'), the first variation information module (14, 14'), and the second variation information module (16, 16') is detached from the release layer and is adhered to the carrier (2).

6. The composite information label (10, 10', 10") according to claim 1, wherein the temperature range of the normal temperature (NT) is between 20-28 degrees Celsius, the temperature range of the thermotropic temperature is not less than 35 degrees Celsius and the spectrum range of the non-visible light spectrum (NVS) is between 10 nanometers and 400 nanometers.

7. The composite information label (10, 10', 10") according to claim 6, wherein the second information (SD) exhibits a first color at the normal temperature (NT) and a second color at the thermotropic temperature (ANT), and the first color and the second color are colorless or transparent.

8. The composite information label (10, 10', 10") according to claim 6, wherein the third information (TD) exhibits single or multiple fluorescent colors in the non-visible light spectrum (NVS).

9. The composite information label (10, 10', 10") according to claim 1, wherein the visible ink and the parametric variation ink are silicon inks.

10. The composite information label (10, 10', 10") according to claim 1, wherein the size of the composite information label (10, 10', 10") is less than 20mm*20mm.

11. The composite information label (10, 10', 10") according to claim 1, wherein the basic information module (12, 12') is a quick response code type, and the quick response code type at least includes quiet zone (122), a finder pattern (124) and a data area (126).

12. The composite information label (10, 10', 10") according to claim 11, wherein the data area includes a second variation information module (16, 16').

13. The composite information label (10, 10', 10") according to claim 12, wherein the finder pattern includes a first variation information module (14, 14') and a second variation information module (16, 16').

14. The composite information label (10, 10', 10") according to claim 12, wherein the basic information module (12, 12') forms the first information (FD) at the finder pattern (124), the variation information module covers the first information, or the basic information module (12, 12') covers the second information (SD).

15. The composite information label (10, 10', 10") according to claim 14, wherein the first information (FD), the second information (SD), and the third information are a solid pattern and a hollow pattern.

16. The composite information label (10, 10', 10") according to claim 1 or 11, wherein the variation information module further includes a fourth variation information module (18) to provide a fourth information (FD'), wherein the fourth variation information (18) is fluorescent ink, and the fourth information (FD') is least one of text and pattern.

17. The composite information label (10, 10', 10") according to claim 11, wherein the basic information module (12, 12') is made of black ink, and the finder pattern (124) and the data area (126) are printed with a white ink.

18. A composite information label printing method, comprising the following steps:
providing a basic information module (12, 12') made of a visible ink, the basic information module (12, 12') forms a first information (FD);
providing a variation information module made of a parametric variation ink, the variation information module forms at least one of a second information (SD) and a third information (TD), wherein the parametric variation ink is at least one of a thermochromic ink and a ultraviolet fluorescent ink, and the thermochromic ink forms a first variation information module (14, 14') of the second information (SD) and the ultraviolet fluorescent ink forms a second variation information module (16, 16') of the third information (TD); and
combining the basic information module (12, 12'), the first variation information module (14, 14') and the second variation information module (16, 16') to form a composite information, wherein the basic information module (12, 12') and the variation information module are combined into one or more layers, an operating condition based on at least one of temperature and wavelength are applied to the variation information module, wherein the temperature includes a normal temperature (NT) and a thermochromic temperature (ANT) and the wavelength further includes a visible light spectrum (VS) and a non-visible light spectrum (NVS), the basic information module (12, 12') combined with,
the first variation information module (14, 14') and the second variation information module (16, 16') is at least one of (a) to (d) according to the operating condition of the normal temperature (NT), the thermochromic temperature (ANT), the visible light spectrum (VS) and the non-visible light spectrum (NVS):
(a) showing at least one of the first information (FD) and the second information (SD) under the operating conditions of the normal temperature (NT) and the visible light spectrum (VS);
(b) showing the first information (FD) under the operating condition of the thermotropic temperature (ANT) and the visible light spectrum (VS);
(c) showing at least one of the first information (FD), the second information (SD) and the third information (TD) under the operating condition of the normal temperature (NT) and the non-visible light spectrum (NVS); and
(d) showing at least one of the first information (FD) and the third information (TD) under the operating condition of the thermotropic temperature (ANT) and the non-visible light spectrum (NVS).

19. The composite information label printing method according to claim 18, wherein the basic information module (12, 12') is a quick response code type, and the quick response code type at least includes a quiet zone (122), a finder pattern (124) and a data area (126).

20. The composite information label printing method according to claim 18, wherein the visible ink and the parametric variation ink are silicon inks.

21. The composite information label printing method according to claim 18, wherein the size of the composite information label (10, 10', 10") is less than 20mm*20mm.

22. The composite information label printing method according to claim 18, wherein the basic information module (12, 12') is made of black ink, and the finder pattern (124) and the data area (126) are printed with a white ink.

## Patentansprüche

1. Ein zusammengesetztes Informationsetikett (10, 10', 10"), worin:
Ein Basisinformationsmodul (12,12') bildet die erste Information (FD), worin das Basisinformationsmodul (12,12') die sichtbare Tinte ist und die erste Information (FD) mindestens einer des Textes und des Musters ist; das Etikett zeichnet sich aus durch:
Ein Varianteninformationsmodul (14,14') bildet mindestens eine der zweiten Informationen (SD) und der dritten Information (TD), worin das Varianteninformationsmodul (14,14') die parametrische Variantentinte ist, die zweite Information (SD) und die dritte Information (TD) jeweilig mindestens einer des Textes und des Musters sind, die parametrische Variantentinte mindestens eine der Thermochromtinte und der ultravioletten fluoreszierenden Tinte ist, und die Thermochromtinte das erste Varianteninformationsmodul (14, 14') der zweiten Information (SD) bildet, und die ultraviolette fluoreszierende Tinte das zweite Varianteninformationsmodul (16,16') der dritten Information (TD) bildet;
Worin das Basisinformationsmodul (12, 12') und das Varianteninformationsmodul (14, 14') zu einer oder mehreren Schichten kombiniert werden, und die Betriebsbedingung, die auf mindestens einer der Temperatur und Wellenlänge basiert, auf das Varianteninformationsmodul angewendet wird, damit das Basisinformationsmodul (12, 12') sich mit dem Varianteninformationsmodul interagieren; worin die Temperatur die Normaltemperatur (NT) und die thermogene Temperatur (ANT) umfasst, und die Wellenlänge ferner das sichtbare Lichtspektrum (VS) und das nicht sichtbare Lichtspektrum (NVS) umfasst; worin das Basisinformationsmodul (12, 12'), das mit dem ersten Varianteninformationsmodul (14, 14') und dem zweiten Varianteninformationsmodul (16, 16') kombiniert wird, nach der Betriebsbedingung von der Normaltemperatur (NT), der thermogenen Temperatur (ANT), des sichtbaren Lichtspektrums (VS) und des nicht sichtbaren Lichtspektrums (NVS) mindestens eines der (a) bis (d) ist:
(a) Mindestens eine der ersten Information (FD) und zweiten Information (SD) unter Betriebsbedingungen von der Normaltemperatur (NT) und dem sichtbaren Lichtspektrum (VS) zeigen;
(b) Die erste Information (FD) unter Betriebsbedingungen von der thermogenen Temperatur (ANT) und dem sichtbaren Lichtspektrum (VS) zeigen;
(c) Mindestens eine der ersten Information (FD), der zweiten Information (SD) und der dritten Information (TD) unter Betriebsbedingungen von der Normaltemperatur (NT) und dem nicht sichtbaren Lichtspektrum (NVS) zeigen; und
(d) Mindestens eine der ersten Information (FD) und der dritten Information (TD) unter Betriebsbedingungen von der thermogenen Temperatur (ANT) und dem nicht sichtbaren Lichtspektrum (NVS) zeigen;

2. Das zusammengesetzte Informationsetikett nach Anspruch 1, ferner umfasst einen Träger (2) zum Ankleben vom Basisinformationsmodul (12, 12'), dem ersten Varianteninformationsmodul (14, 14') und dem zweiten Varianteninformationsmodul (16, 16').

3. Das zusammengesetzte Informationsetikett (10, 10', 10') nach Anspruch 2, worin das Material des Trägers (2) aus mindestens einer von Baumwolle, Leinen, Wolle, Seide, Viskose, Nylon, Polyester, Acrylfaser, Acetatfaser, Triacetatfaser, Elastomerfaser, Glasfaser, Metallfaser, Gummifaser und Zellstoff besteht.

4. Das zusammengesetzte Informationsetikett (10,10', 10') nach Anspruch 2, ferner umfasst eine Trennschicht, und das Basisinformationsmodul (12,12'), das erste Varianteninformationsmodul (14,14') und das zweite Varianteninformationsmodul (16,16') sind auf der Trennschicht angeordnet.

5. Das zusammengesetzte Informationsetikett (10,10', 10') nach Anspruch 4, worin die Wärmeübertragungstechnologie auf die Trennschicht mit dem Basisinformationsmodul (12,12'), dem ersten Varianteninformationsmodul (14,14') und dem zweiten Varianteninformationsmodul (16,16') angewendet wird, so dass das Basisinformationsmodul (12,12'), das erste Varianteninformationsmodul (14,14') und das zweite Varianteninformationsmodul (16,16') von der Trennschicht abgezogen und auf dem Träger (2) geklebt werden.

6. Das zusammengesetzten Informationsetikett (10,10',10") nach Anspruch 1, worin der Temperaturbereich von der Normaltemperatur (NT) zwischen 20 und 28 Grad Celsius liegt, der Temperaturbereich von der thermogenen Temperatur nicht weniger als 35 Grad Celsius beträgt und der Spektralbereich von dem nicht sichtbaren Lichtspektrum (NVS) zwischen 10 Nanometer und 400 Nanometer liegt.

7. Das zusammengesetzte Informationsetikett (10,10',10") nach Anspruch 6, worin die zweite Information (SD) die erste Farbe bei der Normaltemperatur (NT) und die zweite Farbe bei der thermogenen Temperatur (ANT) ausstellt, und die erste und zweite Farbe farblos oder transparent sind.

8. Das zusammengesetzte Informationsetikett (10,10',10") nach Anspruch 6, worin die dritte Information (TD) einzelne oder mehrere fluoreszierende Farben im nicht sichtbaren Lichtspektrum (NVS) ausstellt.

9. Das zusammengesetzte Informationsetikett (10,10',10") nach Anspruch 1, worin die sichtbare Tinte und die parametrische Variantentinte die Silikontinten sind.

10. Das zusammengesetzte Informationsetikett (10,10',10") nach Anspruch 1, worin die Größe von dem zusammengesetzten Informationsetikett (10,10',10") kleiner als 20 mm * 20 mm ist.

11. Das zusammengesetzte Informationsetikett (10, 10', 10") nach Anspruch 1, worin das Basisinformationsmodul (12, 12') ein Schnellreaktionscodetyp ist, und der Schnellreaktionscodetyp mindestens die Ruhezone (122), ein Findermuster (124) und einen Datenbereich (126) umfasst.

12. Das zusammengesetzte Informationsetikett (10,10',10") nach Anspruch 11, worin der Datenbereich das zweite Varianteninformationsmodul (16,16') umfasst.

13. Das zusammengesetzte Informationsetikett (10, 10', 10') nach Anspruch 12, worin das Findermuster das erste Varianteninformationsmodul (14, 14') und das zweite Varianteninformationsmodul (16, 16') umfasst.

14. Das zusammengesetzte Informationsetikett (10, 10', 10") nach Anspruch 12, worin das Basisinformationsmodul (12, 12') die erste Information (FD) am Findermuster (124) bildet, das Varianteninformationsmodul die erste Information bedeckt oder das Basisinformationsmodul (12, 12') die zweite Information (SD) bedeckt.

15. Das zusammengesetzte Informationsetikett (10,10',10") nach Anspruch 14, worin die erste Information (FD), die zweite Information (SD) und die dritte Information das massive Muster und das hohle Muster sind.

16. Das zusammengesetzte Informationsetikett (10, 10', 10') nach Anspruch 1 oder 11, worin das Varianteninformationsmodul ferner das vierte Varianteninformationsmodul (18) umfasst, das eine vierte Information (FD') bereitstellt, worin die vierte Varianteninformation (18) die fluoreszierende Tinte ist und die vierte Information (FD') mindestens einer des Textes und des Musters ist.

17. Das zusammengesetzte Informationsetikett (10,10',10") nach Anspruch 11, worin das Basisinformationsmodul (12,12') aus schwarzer Tinte gefertigt wird, und das Findermuster (124) und der Datenbereich (126) mit weißer Tinte gedruckt werden.

18. Ein Druckverfahren für zusammengesetztes Informationsetikett umfasst die folgenden Schritte:
Bereitstellen eines Basisinformationsmoduls (12,12'), das aus sichtbarer Tinte gefertigt wird, und das Basisinformationsmodul (12,12') bildet die erste Information (FD); bereitstellen eines Varianteninformationsmoduls, das aus parametrischer Variantentinte gefertigt wird, das Varianteninformationsmodul bildet mindestens eine der zweiten Informationen (SD) und der dritten Information (TD), worin die parametrische Variantentinte mindestens eine der Thermochromtinte und der ultravioletten fluoreszierenden Tinte ist, und die Thermochromtinte das erste Varianteninformationsmodul (14, 14') der zweiten Information (SD) bildet, und die ultraviolette fluoreszierende Tinte das zweite Varianteninformationsmodul (16; 16') der dritten Information (TD) bildet; und Kombinieren des Basisinformationsmoduls (12, 12'), des ersten Variationsinformationsmoduls (14, 14') und des zweiten Variationsinformationsmoduls (16, 16'), um die zusammengesetzte Information zu bilden, worin das Basisinformationsmodul (12, 12') und das Variationsinformationsmodul zu einer oder mehreren Schichten kombiniert werden, und die Betriebsbedingung, die auf mindestens einer der Temperatur und Wellenlänge basiert, auf das Varianteninformationsmodul angewendet wird, worin die Temperatur die Normaltemperatur (NT) und die thermogene Temperatur (ANT) umfasst, und die Wellenlänge ferner das sichtbare Lichtspektrum (VS) und das nicht sichtbare Lichtspektrum (NVS) umfasst, das Basisinformationsmodul (12, 12'), das mit dem ersten Varianteninformationsmodul (14, 14') und dem zweiten Varianteninformationsmodul (16, 16') kombiniert wird, nach der Betriebsbedingung von der Normaltemperatur (NT), der thermogenen Temperatur (ANT), des sichtbaren Lichtspektrums (VS) und des nicht sichtbaren Lichtspektrums (NVS) mindestens eines der (a) bis (d) ist:
(a) Mindestens eine der ersten Information (FD) und zweiten Information (SD) unter Betriebsbedingungen von der Normaltemperatur (NT) und dem sichtbaren Lichtspektrum (VS) zeigen;
(b) Die erste Information (FD) unter Betriebsbedingungen von der thermogenen Temperatur (ANT) und dem sichtbaren Lichtspektrum (VS) zeigen;
(c) Mindestens eine der ersten Information (FD), der zweiten Information (SD) und der dritten Information (TD) unter Betriebsbedingungen von der Normaltemperatur (NT) und dem nicht sichtbaren Lichtspektrum (NVS) zeigen; und
(d) Mindestens eine der ersten Information (FD) und der dritten Information (TD) unter Betriebsbedingungen von der thermogenen Temperatur (ANT) und dem nicht sichtbaren Lichtspektrum (NVS) zeigen;

19. Das Druckverfahren für zusammengesetztes Informationsetikett nach Anspruch 18, worin das Basisinformationsmodul (12, 12') der Schnellreaktionscodetyp ist, und der Schnellreaktionscodetyp mindestens die Ruhezone (122), ein Findermuster (124) und einen Datenbereich (126) umfasst.

20. Das Druckverfahren für zusammengesetztes Informationsetikett nach Anspruch 18, worin die sichtbare Tinte und die parametrische Variantentinte die Silikontinten sind.

21. Das Druckverfahren für zusammengesetztes Informationsetikett nach Anspruch 18, worin die Größe von dem zusammengesetzten Informationsetikett (10,10',10") kleiner als 20 mm * 20 mm ist.

22. Das Druckverfahren für zusammengesetztes Informationsetikett nach Anspruch 18, worin das Basisinformationsmodul (12,12') aus schwarzer Tinte gefertigt wird, und das Findermuster (124) und der Datenbereich (126) mit weißer Tinte gedruckt werden.

## Revendications

1. Une étiquette d'information composite (10, 10', 10"), dans laquelle :
un module d'information de base (12, 12') forme une première information (FD), le module d'information de base (12, 12') étant réalisé à l'aide d'une encre visible, et la première information (FD) étant au moins l'un parmi un texte et un motif ; l'étiquette étant **caractérisée en ce que** :
un module d'information variable (14, 14')forme au moins l'un parmi une seconde information (SD) et une troisième information (TD), le module d'information variable (14, 14') étant réalisé à l'aide d'une encre à variation paramétrique, la seconde information (SD) et la troisième information (TD) étant respectivement au moins l'un parmi un texte et un motif, et l'encre à variation paramétrique étant au moins l'une parmi une encre thermochromique et une encre fluorescente aux ultraviolets, l'encre thermochromique formant un premier module d'information variable (14, 14') associé à la seconde information (SD) et l'encre fluorescente aux ultraviolets formant un second module d'information variable (16, 16') associé à la troisième information (TD) ;
dans laquelle le module d'information de base (12, 12') et le module d'information variable (14, 14') sont combinés en une ou plusieurs couches, une condition de fonctionnement basée sur au moins l'un parmi la température et la longueur d'onde étant appliquée au module d'information variable, de sorte que le module d'information de base (12, 12') interagit avec le module d'information variable, la température comprenant une température normale (NT) et une température thermochromique (ANT) et la longueur d'onde comprenant en outre un spectre de lumière visible (VS) et un spectre de lumière non visible (NVS), dans laquelle la combinaison du module d'information de base (12, 12') avec le premier module d'information variable (14, 14') et le second module d'information variable (16, 16') correspond à au moins l'un des cas (a) à (d) selon la condition de fonctionnement associée à la température normale (NT), à la température thermochromique (ANT), au spectre de lumière visible (VS) et au spectre de lumière non visible (NVS) :
(a) afficher au moins l'un parmi la première information (FD) et la seconde information (SD) dans les conditions de fonctionnement de température normale (NT) et de spectre de lumière visible (VS) ;
(b) afficher la première information (FD) dans les conditions de fonctionnement de température thermotrope (ANT) et de spectre de lumière visible (VS) ;
(c) afficher au moins l'un parmi la première information (FD), la seconde information (SD) et la troisième information (TD) dans les conditions de fonctionnement de température normale (NT) et de spectre de lumière non visible (NVS) ; et
(d) afficher au moins l'un parmi la première information (FD) et la troisième information (TD) dans les conditions de fonctionnement de température thermotrope (ANT) et de spectre de lumière non visible (NVS).

2. L'étiquette d'information composite selon la revendication 1, comprenant en outre un support (2) destiné à recevoir le module d'information de base (12, 12'), le premier module d'information variable (14, 14') et le second module d'information variable (16, 16').

3. L'étiquette d'information composite (10, 10', 10") selon la revendication 2, dans laquelle le matériau du support (2) est au moins l'un parmi le coton, le lin, la laine, la soie, le rayonne, le nylon, le polyester, l'acrylique, l'acétate, le triacétate, la fibre élastique, la fibre de verre, la fibre métallique, la fibre de caoutchouc et la pâte à papier.

4. L'étiquette d'information composite (10, 10', 10") selon la revendication 2, comprenant en outre une couche de décollement, et le module d'information de base (12, 12'), le premier module d'information variable (14, 14') et le second module d'information variable (16, 16') étant disposés sur la couche de décollement.

5. L'étiquette d'information composite (10, 10', 10") selon la revendication 4, dans laquelle une technologie de transfert thermique est appliquée à la couche de décollement comportant le module d'information de base (12, 12'), le premier module d'information variable (14, 14') et le second module d'information variable (16, 16'), de sorte que le module d'information de base (12, 12'), le premier module d'information variable (14, 14') et le second module d'information variable (16, 16') se détachent de la couche de décollement et s'adhèrent au support (2).

6. L'étiquette d'information composite (10, 10', 10") selon la revendication 1, dans laquelle la plage de température normale (NT) est comprise entre 20 et 28 degrés Celsius, la plage de température thermotrope est d'au moins 35 degrés Celsius et la plage de spectre de lumière non visible (NVS) est comprise entre 10 nanomètres et 400 nanomètres.

7. L'étiquette d'information composite (10, 10', 10") selon la revendication 6, dans laquelle la seconde information (SD) présente une première couleur à température normale (NT) et une seconde couleur à température thermotrope (ANT), et la première couleur et la seconde couleur sont incolores ou transparentes.

8. L'étiquette d'information composite (10, 10', 10") selon la revendication 6, dans laquelle la troisième information (TD) présente une ou plusieurs couleurs fluorescentes dans le spectre de lumière non visible (NVS).

9. L'étiquette d'information composite (10, 10', 10") selon la revendication 1, dans laquelle l'encre visible et l'encre à variation paramétrique sont des encres de silicium.

10. L'étiquette d'information composite (10, 10', 10") selon la revendication 1, dans laquelle les dimensions de l'étiquette d'information composite (10, 10', 10") sont inférieures à 20 mm x 20 mm.

11. L'étiquette d'information composite (10, 10', 10") selon la revendication 1, dans laquelle le module d'information de base (12, 12') est de type code QR (Quick Response), et le type code QR comprend au moins une zone silencieuse (122), un motif de repérage (124) et une zone de données (126).

12. L'étiquette d'information composite (10, 10', 10") selon la revendication 11, dans laquelle la zone de données comprend un second module d'information variable (16, 16').

13. L'étiquette d'information composite (10, 10', 10") selon la revendication 12, dans laquelle le motif de repérage comprend un premier module d'information variable (14, 14') et un second module d'information variable (16, 16').

14. L'étiquette d'information composite (10, 10', 10") selon la revendication 12, dans laquelle le module d'information de base (12, 12') forme la première information (FD) au niveau du motif de repérage (124), le module d'information variable recouvre la première information, ou le module d'information de base (12, 12') recouvre la seconde information (SD).

15. L'étiquette d'information composite (10, 10', 10") selon la revendication 14, dans laquelle la première information (FD), la seconde information (SD) et la troisième information sont un motif plein et un motif creux.

16. L'étiquette d'information composite (10, 10', 10") selon la revendication 1 ou 11, dans laquelle le module d'information variable comprend en outre un quatrième module d'information variable (18) destiné à fournir une quatrième information (FD'), le quatrième module d'information variable (18) étant réalisé à l'aide d'une encre fluorescente, et la quatrième information (FD') étant au moins l'un parmi un texte et un motif.

17. L'étiquette d'information composite (10, 10', 10") selon la revendication 11, dans laquelle le module d'information de base (12, 12') est réalisé à l'aide d'une encre noire, et le motif de repérage (124) et la zone de données (126) sont imprimés à l'aide d'une encre blanche.

18. Un procédé d'impression d'étiquette d'information composite, comprenant les étapes suivantes :
fournir un module d'information de base (12, 12') réalisé à l'aide d'une encre visible, le module d'information de base (12, 12') formant une première information (FD) ; fournir un module d'information variable réalisé à l'aide d'une encre à variation paramétrique, le module d'information variable formant au moins l'un parmi une seconde information (SD) et une troisième information (TD), l'encre à variation paramétrique étant au moins l'une parmi une encre thermochromique et une encre fluorescente aux ultraviolets, et l'encre thermochromique formant un premier module d'information variable (14, 14') associé à la seconde information (SD) et l'encre fluorescente aux ultraviolets formant un second module d'information variable (16, 16') associé à la troisième information (TD) ; et combiner le module d'information de base (12, 12'), le premier module d'information variable (14, 14') et le second module d'information variable (16, 16') pour former une information composite, le module d'information de base (12, 12') et le module d'information variable étant combinés en une ou plusieurs couches, une condition de fonctionnement basée sur au moins l'un parmi la température et la longueur d'onde étant appliquée au module d'information variable, la température comprenant une température normale (NT) et une température thermochromique (ANT) et la longueur d'onde comprenant en outre un spectre de lumière visible (VS) et un spectre de lumière non visible (NVS), la combinaison du module d'information de base (12, 12') avec le premier module d'information variable (14, 14') et le second module d'information variable (16, 16') correspondant à au moins l'un des cas (a) à (d) selon la condition de fonctionnement associée à la température normale (NT), à la température thermochromique (ANT), au spectre de lumière visible (VS) et au spectre de lumière non visible (NVS) :
(a) afficher au moins l'un parmi la première information (FD) et la seconde information (SD) dans les conditions de fonctionnement de température normale (NT) et de spectre de lumière visible (VS) ;
(b) afficher la première information (FD) dans les conditions de fonctionnement de température thermotrope (ANT) et de spectre de lumière visible (VS) ;
(c) afficher au moins l'un parmi la première information (FD), la seconde information (SD) et la troisième information (TD) dans les conditions de fonctionnement de température normale (NT) et de spectre de lumière non visible (NVS) ; et
(d) afficher au moins l'un parmi la première information (FD) et la troisième information (TD) dans les conditions de fonctionnement de température thermotrope (ANT) et de spectre de lumière non visible (NVS).

19. Le procédé d'impression d'étiquette d'information composite selon la revendication 18, dans lequel le module d'information de base (12, 12') est de type code QR, et le type code QR comprend au moins une zone silencieuse (122), un motif de repérage (124) et une zone de données (126).

20. Le procédé d'impression d'étiquette d'information composite selon la revendication 18, dans lequel l'encre visible et l'encre à variation paramétrique sont des encres de silicium.

21. Le procédé d'impression d'étiquette d'information composite selon la revendication 18, dans lequel les dimensions de l'étiquette d'information composite (10, 10', 10") sont inférieures à 20 mm x 20 mm.

22. Le procédé d'impression d'étiquette d'information composite selon la revendication 18, dans lequel le module d'information de base (12, 12') est réalisé à l'aide d'une encre noire, et le motif de repérage (124) et la zone de données (126) sont imprimés à l'aide d'une encre blanche.
